# EUROPÄISCHE PATENTANMELDUNG

(11) **EP 4 575 039 A1**
(43) Veröffentlichungstag der Anmeldung: **25.06.2025**
(21) Anmeldenummer: 23219948.9
(22) Anmeldetag: 22.12.2023
(51) Int. Cl.: C25B 1/04, C25B 9/60, C25B 9/75, C25B 9/77

(54) **VERFAHREN ZUR HERSTELLUNG EINER ELEKTROLYSEANORDNUNG**

(71) Anmelder: Sunfire GmbH, 01237 Dresden (DE)
(72) Erfinder: STROHBACH, Thomas, 01309 Dresden (DE); VANDERCRYSSE, Felix, 82327 Tutzing (DE); SPURA, David, 01219 Dresden (DE); SCHADE, Christoph, 01445 Radebeul (DE); SURREY, Alexander, 01219 Dresden (DE); AMMEUX, Clément, 10781 Berlin (DE); VESELY, Jan, 54101 Trutnov (CZ); LEMBERG, Kevin, 56075 Koblenz (DE)
(74) Vertreter: Hauck Patent- und Rechtsanwälte PartmbB

(57) **Zusammenfassung**

Die Erfindung betrifft ein Verfahren zur Herstellung einer Elektrolyseanordnung umfassend wenigstens ein Gehäuse mit einem Innenraum, und wenigstens einer im Innenraum des Gehäuses angeordneten Stackanordnung, wobei die Stackanordnung mehrere in eine Stapelrichtung gestapelte Elektrolysezellen umfasst, wobei zumindest einige der Elektrolysezellen jeweils eine Membran-Elektroden-Anordnung und einen Interkonnektor umfassen, und wobei die Membran-Elektroden-Anordnung und der Interkonnektor jeweils eine Sauerstoffseite und eine Wasserstoffseite aufweisen, wobei in einem Vorbereitungsschritt zur Herstellung einer Membran-Elektroden-Anordnungen auf den zwei Oberflächen einer Elektrolyt-Membran jeweils mindestens eine pastöse Schicht aufgebracht wird, wobei mindestens eine der Schichten auf jeweils einer Oberfläche zur Ausbildung einer auf der Wasserstoffseite der Membran-Elektroden-Anordnungen ausgebildeten ersten Elektrode und einer auf der Sauerstoffseite der Membran-Elektroden-Anordnungen ausgebildeten zweiten Elektrode dient, in einem Vorbereitungsschritt ein Dichtungsmaterial, umfassend Glas und/oder Glaskeramik auf die Interkonnektoren aufgebracht wird, in einem Montageschritt die vorbereiteten Interkonnektoren und Membran-Elektroden-Anordnungen abwechselnd zu einem Stapelverbund gestapelt werden, und in einem Montageschritt der Stapelverbund unter Einwirkung von thermischer Energie und einer auf den Stapelverbund in Stapelrichtung nach innen gerichteter mechanischer Spannkraft gefügt wird.

## Beschreibung

Die Erfindung betrifft ein Verfahren zur Herstellung einer Elektrolyseanordnung, die in Elektrolyseanlagen wie beispielsweise in Hochtemperaturelektrolyseanlagen oder in Brennstoffzellenanlagen eingesetzt werden kann.

Die erfindungsgemäße Elektrolyseanordnung ist insbesondere geeignet für den Einsatz in Festoxid-Elektrolysezellen-Systemen (engl. Solid Oxide Electrolyzer Cell, SOEC) sowie in reversiblen Festoxidzellen-Systemen (engl. reversible Solid Oxide Cell, rSOC) im Elektrolysebetrieb. Solche Systeme werden vorwiegend für die Hochtemperatur-Elektrolyse (HTE) eingesetzt.

Ein Festoxid-Elektrolyseur (SOEC) umfasst mindestens eine Elektrolysezelle, mit der unter Einsatz elektrischer Energie Wasser (H₂O) in seine Bestandteile Wasserstoff (H₂) und Sauerstoff (O₂) aufgespaltet werden kann. Der Aufbau und die Funktion einer Festoxid-Elektrolysezelle ähneln denen einer Festoxid-Brennstoffzelle (SOFC, Solid Oxide Fuel Cell), da sie auf derselben Technologie basieren. Ein Hauptunterschied besteht darin, dass bei der Elektrolyse Wasserdampf (H₂O(g)) als Eingangsmedium (Eduktgas) verwendet wird, während bei der Brennstoffzelle Sauerstoff und Brenngas (z. B. Wasserstoff) als Eingangsmedien dienen.

Ein Festoxid-Elektrolyseur nutzt den Hochtemperaturbetrieb (typischerweise 650-1000°C), da der Wirkungsgrad gegenüber anderen Elektrolysetechnologien deutlich höher ist. Man macht sich hierbei zu Nutze, dass bei diesen Temperaturen die eingesetzten keramischen Materialien der Elektrolyte ionisch leitend werden. Ein Festoxid-Elektrolyseur besteht aus mehreren Komponenten, die jeweils unterschiedliche Funktionen erfüllen. Zu den wesentlichen Bestandteilen des Festoxid-Elektrolyseurs zählen ein Stack mit einer Vielzahl an Zellen, wobei eine Zelle unter anderen eine Anode, eine Elektrolytschicht und eine Kathode aufweist. Die Kathode enthält oft aus einem Gemisch von Nickel und Elektrolytmaterialien. Wasser, bei der Hochtemperaturelektrolyse in Form von Wasserdampf, wird an die Kathode geführt. Der Prozess der Elektrolyse läuft folgendermaßen ab: legt man eine elektrische Spannung an die Zelle an, die oberhalb der Leerlaufspannung (OCV) liegt, diffundiert das Wasser in die Kathode hinein, wo unter Aufnahme von Elektronen der elektrochemische Umsatz (Redoxreaktion) des Wasserdampfs stattfindet und Wasserstoff und Sauerstoffionen erzeugt werden. Die Elektrolytschicht besteht aus festem Elektrolytmaterial, wie zum Beispiel Yttriumstabilisiertem Zirkoniumdioxid (YSZ). Diese Elektrolytschicht ermöglicht den Transport von Sauerstoffionen (O²⁻) von der Kathode zur Anode. Die Anode besteht aus Anodenmaterialien, wie beispielsweise Lanthan-Mangan-Cobaltit oder Lanthan-Ferrit. An der Anode werden aus den Sauerstoffionen (O²⁻) molekularer Sauerstoff (O₂) unter Abgabe von Elektronen erzeugt.

Festoxid-Elektrolysezellen sind aufgrund ihrer hohen Betriebstemperaturen effizient und können sauberen Wasserstoff produzieren. Sie finden Anwendung in der Wasserstoffherstellung, Energiespeicherung und anderen industriellen Prozessen.

Die Hochtemperatur-Elektrolyse (HTE) ist ein Elektrolyseverfahren zur Gewinnung von Wasserstoff aus Wasser bei hohen Temperaturen unter Einsatz elektrischer Energie. Im Gegensatz zur Niedertemperatur-Elektrolyse (LTE), die bei Temperaturen unter 100 Grad Celsius arbeitet, erfolgt die Hochtemperatur-Elektrolyse bei wesentlich höheren Temperaturen, typischerweise im Bereich von 500 bis 1000 Grad Celsius. Bei einer Niedertemperatur-Elektrolyse wird üblicherweise eine Polymerelektrolytmembranen (PEM) als Elektrolyt verwendet und daher häufig von einem PEM-Elektrolyseverfahren gesprochen. Die PEM ist eine dünne Polymermembran, die Protonen durchlässt, während sie Elektronen und Gase blockiert. Als Material für die PEM wird häufig ein perfluorsulfoniertes Polymer, wie Nafion, verwendet. Die PEM-Elektrolyse wird häufig in Anwendungen eingesetzt, bei denen eine schnelle Reaktionszeit und Flexibilität erforderlich sind. Dazu gehören zum Beispiel die Wasserstoffproduktion für Brennstoffzellenfahrzeuge, die Integration erneuerbarer Energien durch Elektrolyse und die dezentrale Wasserstoffproduktion.

In einer gattungsgemäßen Elektrolyseanordnung werden mehrere, häufig eine Vielzahl, von Membran-Elektroden-Einheiten (membrane-electrode-assembly; kurz MEA) in einem Stapelverbund angeordnet. Solche Stapel werden auch Elektrolysezellenstapel oder Brennstoffzellenstapel genannt. Solche Stapelverbunde weisen in der Regel eine Vielzahl von Ebenen auf, wobei jede MEA eines Stapelverbundes als eine Ebene betrachtet werden kann. Zwischen diesen Ebenen sind Interkonnektoren (auch bekannt als Bipolarplatten) angeordnet. In einem Stapelverbund werden eine Vielzahl dieser MEAs und Interkonnektoren als Wiederholeinheiten gestapelt. Der fertige Stapel wird auch als Stack bezeichnet. Derartige Stacks können mehrere hundert Ebenen, insbesondere mehr als 800 bzw. mehr als 900 Ebenen aufweisen.

Für den Elektrolyseprozess werden Gasströme der MEA zugeführt und von der MEA abgeführt. Das zugeführte Gas wird üblicherweise in auf der Oberfläche der MEA angeordneten Kanälen geführt.

Aus EP 3360187 A1 ist ein System zur Regelung des Drucks eines Reaktors für Hochtemperatur-Elektrolyse oder Co-Elektrolyse (HTE) oder für einen unter Druck arbeitenden SOFC-Brennstoffzellenstapel bekannt. Der Betrieb des Systems umfasst: die Regelung stromaufwärts einer der Kammern des Volumenstroms eines feuchtigkeitshaltigen Gases, um die elektrochemische Stabilität eines voreingestellten Betriebspunkts zu gewährleisten; und die Druckregelung mithilfe von Ventilen, die stromabwärts des Stapels angeordnet sind, um Gase, einschließlich des feuchtigkeitshaltigen Gases, zu regulieren und die im Allgemeinen heiß sind.

Aus US 2008118803 A1 ist eine Brennstoffzelleneinheit bekannt, bestehend aus einem Elektrolyten mit einer Anode auf der einen Seite und einer Kathode auf der anderen Seite, die jeweils mit einem Strömungs-/Gasverteilungsgitter mit Gaszufuhr/-abfuhr versehen sind, wobei jedem Gitter eine Separatorplatte sowie eine auf die Separatorplatte wirkende Dichtung benachbart ist.

Die Erforschung herkömmlicher Elektrolysesysteme hat ergeben, dass die konstruktiven Ausgestaltungen bekannter Systeme Raum für die Optimierung der Elektrolyse mit hohem Wirkungsgrad bei dauerhaftem Betrieb lassen.

Die Aufgabe der vorliegenden Erfindung besteht darin, ein Verfahren zur Herstellung einer Elektrolyseanordnung anzugeben, die einen hohen Wirkungsgrad auch bei dauerhaftem Betrieb ermöglicht.

Die Aufgabe wird durch das in Anspruch 1 angegebene Verfahren gelöst. Vorteilhafte Ausgestaltungen sind Gegenstand der Unteransprüche.

Erfindungsgemäß ist ein Verfahren zur Herstellung einer Elektrolyseanordnung umfassend wenigstens ein Gehäuse mit einem Innenraum, und wenigstens einer im Innenraum des Gehäuses angeordneten Stackanordnung, wobei die Stackanordnung mehrere in eine Stapelrichtung gestapelte Elektrolysezellen umfasst, wobei zumindest einige der Elektrolysezellen jeweils eine Membran-Elektroden-Anordnung (MEA) und einen Interkonnektor umfassen, und wobei die Membran-Elektroden-Anordnung und der Interkonnektor jeweils eine Sauerstoffseite und eine Wasserstoffseite aufweisen. Das Verfahren kennzeichnet sich dadurch aus, dass in einem Vorbereitungsschritt zur Herstellung einer Membran-Elektroden-Anordnungen auf den zwei Oberflächen einer Elektrolyt-Membran jeweils mindestens eine pastöse Schicht aufgebracht wird, wobei mindestens eine der Schichten auf jeweils einer Oberfläche zur Ausbildung einer auf der Wasserstoffseite der Membran-Elektroden-Anordnungen ausgebildeten ersten Elektrode und einer auf der Sauerstoffseite der Membran-Elektroden-Anordnungen ausgebildeten zweiten Elektrode dient, in einem Vorbereitungsschritt ein Dichtungsmaterial, umfassend Glas und/oder Glaskeramik auf die Interkonnektoren aufgebracht wird, in einem Montageschritt die vorbereiteten Interkonnektoren und Membran-Elektroden-Anordnungen abwechselnd zu einem Stapelverbund gestapelt werden, und in einem Montageschritt der Stapelverbund unter Einwirkung von thermischer Energie und einer auf den Stapelverbund in Stapelrichtung nach innen gerichteter mechanischer Spannkraft gefügt wird.

Bei der pastösen Schicht handelt es sich um mindestens eine auf die Elektrolyt-Membran aufgetragene Paste. Zumindest für die Herstellung einer der Schichten handelt es sich um eine Nickel-Oxid-Paste. Die pastöse Schicht wird nass aufgetragen und vor dem Fügen getrocknet. Es kann vorgesehen sein, dass eine oder mehrere der pastösen Schichten vor dem oder beim Fügen gesintert werden. Eine Sinterung vor dem Fügeschritt kann insbesondere dann vorteilhaft sein, wenn bereits für den Fügeschritt, bei dem die Stackanordnung einer thermischen Konditionierung unterzogen wird und gleichzeitig hohe Druckkräfte auf den Stapelverbund ausgeübt werden, eine stabil ausgebildete Schicht vorliegen muss.

Für das Fügen wird der die Stackanordnung ausbildende Stapelverbund mit einem vorgegebenen Temperaturprofil beaufschlagt. Die thermische Konditionierung wird über eine vorgegebene Dauer vollzogen, bis alle Komponenten eine Fügetemperatur erreicht haben. Dabei verbinden sich die Komponenten fluidisch dichtend miteinander. Amorphe oder teilkristalline Materialien, wie ein als Glasdichtungen ausgeführtes Dichtungsmaterial werden zähflüssig und schmiegen sich fluidisch dichtend und elektrisch isolierend an die Interkonnektoren an.

Das Dichtungsmaterial ist vorzugsweise bandartig geformt und wird mit geometrisch wiederkehrender Struktur auf den Interkonnektor aufgebracht. Dabei ist daran gedacht, dass die geometrisch wiederkehrende Struktur des Dichtungsmaterials zickzackförmig, laschenförmig, mäanderförmig oder in Form aneinander gereihter Halbkreise aufgebracht wird. Insbesondere derart, dass das Dichtungsmaterial auf der Wasserstoffseite des Interkonnektors diesen in seinem Randbereich vollumfänglich umläuft. Auf der Sauerstoffseite des Interkonnektors wird das Dichtungsmaterial um die in dem Interkonnektor eingearbeiteten Manifoldöffnungen herum, ihren Öffnungsrand jeweils vollumfänglich umlaufend, angeordnet.

Der Auftrag mit geometrisch wiederkehrender Struktur erhöht die Streckenlänge der bandförmigen Glasdichtung im Gegensatz zu einer geradlinigen Führung. Damit kann bei gleicher Menge an Dichtungsmaterial im Vergleich zu einer geradlinigen Führung eine größere Oberfläche des Dichtungsmaterials bereitgestellt werden, was bei einem sich anschließenden Sinterprozess eine bessere Entgasung des Dichtungsmaterials ermöglicht. Alternativ ist bei weniger Menge an Dichtungsmaterial die gleiche Fläche abdichtbar.

Es ist denkbar, dass sich die Dichtungsanordnungen in mindestens zwei Elektrolysezellen der Stackanordnung unterscheiden, hinsichtlich des Musters, der Anzahl, der Dicke und/oder der stofflichen Zusammensetzung des Dichtungsmaterials.

Gemäß einer Ausgestaltung ist vorgesehen, dass das Dichtungsmaterial (44, 46) mit unterschiedlicher Dicke aufgebracht wird. Die Dicke des Dichtungsmaterials unterscheidet sich dabei entlang seiner aufgetragenen Strecke. Dabei kann vorgesehen sein, dass das, vorzugsweise bandförmig aufgetragene Dichtungsmaterial im Randbereich der Manifoldöffnungen der Interkonnektoren dicker aufgetragen wird. Im Bereich der Manifoldöffnungen besteht eine höhere Gefahr von Verbiegung der Interkonnektoren bei einem späteren Verspannen und/oder Fügen der Stackanordnung, wenn die MEA etwa mittig auf den Interkonnektoren angeordnet ist und damit im Randbereich ein Freiraum entsteht. Insbesondere trifft der Auftrag des Dichtungsmaterials mit unterschiedlicher Dicke auf die den Randbereich des Interkonnektors vollständig umlaufende Dichtung zu.

Für die Ausgestaltung der Interkonnektoren ist in einer ersten Variante daran gedacht, dass die Interkonnektoren auf der Sauerstoffseite und/oder auf der Wasserstoffseite frei von gasführenden Strukturen sind. Bevorzugt ist daran gedacht, dass zumindest einige Interkonnektoren als flächiges, insbesondere plattenförmiges Bauelement ausgebildet sind, die auf der Wasserstoffseite und/oder auf der Sauerstoffseite frei von gasleitenden Strukturen sind, wobei diese Interkonnektoren vorzugsweise als flaches Stahlblech ausgeführt sind. Die Interkonnektoren können Beschichtungen aufweisen, die jedoch keine gasleitende Funktion aufweisen. Beispielsweise kann auf der Sauerstoffseite der Interkonnektoren eine sauerstoffundurchlässige Beschichtung angeordnet sein, die einen Sauerstoffdurchtritt zum metallischen Material des Interkonnektors verhindert, um eine Oxidation des metallischen Materials zu vermindern oder zu verhindern.

Für die Erleichterung der Herstellung der Stackanordnung kann vorgesehen sein, dass zumindest einige Komponenten der Stackanordnung, wie Membran-Elektroden-Anordnungen, Interkonnektoren, Konnektorplatten, Topplatte und/oder Bodenplatte jeweils ein Orientierungsmerkmal aufweisen mittels dem die Komponenten zur Herstellung der Stackanordnung orientiert, insbesondere nach dem Poka-Yoke-Prinzip, im Stapelverbund ausgerichtet werden.

Insbesondere mit einem Orientierungsmerkmal an den Interkonnektoren können diese zur Herstellung des Stapelverbunds der Stackanordnung vorteilhafterweise derart manuell, maschinell oder maschinenunterstützt, insbesondere mittels Poka-Yoke-Prinzip orientiert und angeordnet werden, dass ein bestimmtes Ausrichtungsmuster innerhalb der Stackanordnung erreicht wird. Die Orientierungsmerkmale erleichtern die Erkennung der Orientierung der Komponenten, um Fehler zu mindern oder vollständig zu vermeiden.

Gemäß einer bevorzugten Ausgestaltung kann vorgesehen sein, dass mindestens eine der pastösen Schichten eine Struktur definiert, die im gefügten Zustand der Stackanordnung eine gasführende Struktur auf der Oberfläche der MEA ausbildet. Diese Struktur kann in der Art von Rippen oder Kanälen ausgeführt sein oder die Struktur kann eine gasdurchlässige Schicht sein, wie zum Beispiel eine poröse Keramik.

Insbesondere kann diese gasführende Struktur eine sauerstoffdurchlässige Struktur auf der Sauerstoffseite der Membran-Elektroden-Anordnung sein, die zur Ableitung von auf der Sauerstoffseite der Membran-Elektroden-Anordnung entstehendem Sauerstoff in den Innenraum des Gehäuses dient. Dafür ist gemäß einer bevorzugten Ausgestaltung daran gedacht, dass die sauerstoffdurchlässige Struktur im Bereich wenigstens einer Seitenfläche der Stackanordnung zur Ableitung des Sauerstoffs in den Innenraum des Gehäuses hin offen ausgebildet ist. Denkbar ist, dass die sauerstoffdurchlässige Struktur als Kanalstruktur ausgeführt ist, vorzugsweise eine in im Wesentlichen senkrechter Richtung bezüglich der Richtung einer Eduktgas-Kanalstruktur ausgerichtete Kanalstruktur. Die Kanäle können insbesondere rippenartig ausgebildet sein. Die Kanäle können seitlich durch Kanalstege begrenzt, nach unten durch den Körper der MEA und nach oben hin können die Kanäle offen sein, sodass ein zwischen der MEA und dem darüber angeordneter Interkonnektor entstehender Sauerstoff gerichtet ableitbar ist.

Eine Sauerstoffleitung in den Innenraum ist auch möglich, wenn die sauerstoffleitende Struktur als gasdurchlässiges Material, beispielsweise als poröse Keramik oder dergleichen ausgeführt ist. Der Sauerstofftransport kann insbesondere mittels eines Druckgefälles zwischen Innenraum des Gehäuses der Elektrodenanordnung und dem gasführenden Raum zwischen den Sauerstoffseiten von zwei unmittelbar übereinander angeordneter Membran-Elektroden-Anordnungen und Interkonnektoren erwirkt werden.

Nach einer weiteren Ausgestaltung kann vorgesehen sein, dass zumindest in einigen Elektrolysezellen zwischen der Membran-Elektroden-Anordnung und dem Interkonnektor Auflageelemente angeordnet werden.

Die Auflageelemente dienen vorrangig der Justierung und Fixierung der MEA in Bezug zu dem Interkonnektor. Auch ein in Stapelrichtung der Stackanordnung weisender Lastfluss aufgrund einer Verspannung der Komponenten der Stackanordnung untereinander, kann mittels der Auflageelemente zumindest teilweise kompensiert werden, sodass die Gefahr einer Beschädigung der MEA reduziert wird. Diese Verspannungszustände innerhalb der Stackanordnung, sind beispielsweise Resultat unterschiedlicher Materialausdehnung der Komponenten der Stackanordnung bei Temperaturänderungen aufgrund unterschiedlicher Wärmeausdehnungskoeffizienten.

Die Auflageelemente sind vorzugsweise separate Elemente, die zur Herstellung der Stackanordnung zwischen der MEA und den Interkonnektoren platziert werden. Das Material der Auflageelemente ist zum Beispiel so gewählt, dass sie im Betriebszustand der Elektrolyseanordnung zähflüssig sind. Damit ist eine gute Kontaktierung der Auflageelemente auf der MEA einerseits und auf dem Interkonnektor andererseits gegeben. Die Auflageelemente sind vorzugsweise zwischen den Sauerstoffseiten von MEA und Interkonnektor angeordnet. Der Übergang zwischen einem zähflüssigen Zustand und einem festen Zustand der Auflageelementen findet beispielsweise an der Glasübergangstemperatur statt. Im Betriebszustand der Elektrolyseanordnung nehmen die Auflageelemente beispielsweise eine Temperatur von über 900°C, insbesondere 950°C an. Im Ruhezustand der Elektrolyseanordnung ist der Elektrolyseprozess gestoppt und die Temperatur der Anordnung liegt unterhalb der Glasübergangstemperatur der Auflageelemente.

Technisch bewährt hat sich eine Ausgestaltung, nach der die Auflageelemente eine Höhe von ca. 200 µm bis 400 µm aufweisen. Die Auflageelemente weisen vorzugsweise Glas oder Glaskeramik auf.

Hinsichtlich der Platzierung der Auflageelemente auf der MEA ist daran gedacht, dass diese in Aussparungen in einer äußeren Schicht der MEA angeordnet sind. Dafür ist daran gedacht, dass mindestens eine für die Herstellung der Membran-Elektroden-Anordnungen der mit Auflageelementen ausgestatteten Elektrolysezellen auf die Elektrolyt-Membran aufgebrachte pastöse Schicht unter Einarbeitung von Auslassungen zur Herstellung von Aussparungen zur Aufnahme der Auflageelemente aufgebracht wird.

Bei dem Herstellungsverfahren ist gemäß einer Ausgestaltung daran gedacht, dass in einem Vorbereitungsschritt auf mindestens einigen Interkonnektoren eine Beschichtung mittels Drucken, insbesondere mittels Siebdruck aufgebracht wird.

Vorzugsweise ist vorgesehen, dass die Beschichtung der Interkonnektoren eine halbleitende Oxid-Keramik umfasst, insbesondere eine Keramik aufweisend Lanthan (La), Strontium (Sr), Mangan (Mn) und/oder Cobalt (Co), vorzugsweise Lanthan-Strontium-Mangan-Cobalt (LSMC), Mangan Cobalt Eisenoxid (MCF), Lanthan Strontium Manganit (LSM), Lanthan-Strontium-Cobalt-Eisenoxid (LSCF), oder Lanthan-Mangan-Cobalt (LMC).

Des Weiteren ist daran gedacht, dass in einem Vorbereitungsschritt Interkonnektoren bereitgestellt werden, die jeweils zwei Manifoldöffnungen aufweisen, und wobei die Interkonnektoren für die Herstellung der Stackanordnung derart gestapelt werden, dass sich innerhalb der Stackanordnung jeweils mittels der Manifoldöffnungen eine Eduktgas-Manifoldstruktur und eine Produktgas-Manifoldstruktur ausbilden.

Eine besonders effiziente und über die Höhe der Stackanordnung gut verteilte Zu- und Abfuhr von Edukt- und Produktgas kann dadurch unterstützt werden, dass die in die Interkonnektoren eingearbeiteten Eduktgas-Manifoldöffnungen und/oder die Produktgas-Manifoldöffnungen zwischen einem Interkonnektor zu einem nächsten Interkonnektor von unterschiedlicher Größe sind, und wobei die Größen der Manifoldöffnungen derart gewählt sind und die Interkonnektoren für die Herstellung der Stackanordnung derart gestapelt werden, dass eine in Stapelrichtung der Stackanordnung sich verjüngende Eduktgas-Manifoldstruktur und/oder eine sich verjüngende Produktgas-Manifoldstruktur hergestellt wird.

Beispielsweise kann ein sich verjüngender Querschnitt durch eine geeignete Veränderung des Öffnungsquerschnitts der Manifoldöffnungen in den Interkonnektoren erreicht werden. Die Form des gasführenden Volumens innerhalb der Manifoldstrukturen kann dabei durch die Vielzahl der übereinandergestapelten Interkonnektoren eine gewünschte Formgebung annehmen. Alternativ oder zusätzlich kann die Form der Manifoldstrukturen mittels in die Manifoldstrukturen eingelegten Einlegekörpern vorgegeben sein.

Für die effektive Führung von Eduktgas und Produktgas kann insbesondere vorgesehen sein, dass die Eduktgas-Manifoldstruktur und/oder die Produktgas-Manifoldstruktur zumindest bereichsweise keilförmig, prismaförmig, prismastumpfförmig, pyramidenförmig, pyramidenstumpfförmig, konisch oder kegelstumpfförmig ausgebildet ist, und/oder dass wenigstens eine Wandfläche der Eduktgas-Manifoldstruktur und/oder der Produktgas-Manifoldstruktur in Stapelrichtung zumindest bereichsweise gewölbt verläuft. Um eine Vielzahl von unterschiedlich ausgestatteten Interkonnektoren zu vermeiden, was den Herstellungsaufwand und den Aufwand für die Zusammensetzung der Stackanordnung erhöhen würde, kann vorgesehen sein, in die Manifoldstrukturen anordbare Einlegekörper für die Formgebung zu verwenden.

Gemäß einer Ausgestaltung kann vorgesehen sein, dass zumindest einige der Elektrolysezellen ein netzartiges Metallgeflecht, vorzugsweise aufweisend Nickel, insbesondere eine Eisen-Nickel-Legierung, umfassen, das zwischen Membran-Elektroden-Anordnung und Interkonnektor angeordnet wird. Der Anteil von Eisen zu Nickel in dem Metallgeflecht kann zum Beispiel bei 50:50 liegen. Denkbar ist auch die Verwendung einer Eisen-Chrom-Legierung, vorzugsweise das unter der Bezeichnung Crofer 22 bekannte Material, beispielsweise Werkstoff 1.4760 X1CrTiLa22 oder 1.4755 - X1CrWNbTiLa22-2. Das Metallgeflecht kann insbesondere zur Abstützung der MEA über der Wasserstoffseite des anliegend angeordneten Interkonnektors dienen.

Zur Fixierung des Metallgeflechts, kann vorgesehen sein, dass das Metallgeflecht mittels Schweißen, insbesondere mittels Punktschweißen, an der Wasserstoffseite eines Interkonnektors befestigt wird.

Der Fügeprozess zur Herstellung der Stackanordnung kann dadurch unterstützt werden, dass das Fügen einen Fügeschritt umfasst, bei dem zumindest einige Interkonnektoren (22) mit einem elektrischen Strom beaufschlagt werden und mittels des durch den Interkonnektor (22) geleiteten Stroms erwärmt werden. Vorzugsweise werden dafür einzelne oder eine Teilmenge, insbesondere sämtliche Interkonnektoren auf einer Seite der Stackanordnung quer zur Stapelrichtung mit einem ersten Spannungspotiential und auf der gegenüberliegenden Seite der Stackanordnung mit einem zweiten anderen Spannungspotential beaufschlagt, sodass zwischen den Potentialen ein Stromfluss erzeugt wird. Der Stromfluss führt zu einer kontrollierten Erwärmung der Interkonnektoren. Der Stromfluss wird derart dimensioniert, dass die Interkonnektoren eine gewünschte Fügetemperatur erreichen.

Für eine Einfassung der Stackanordnung, die eine Applikation hoher Druckkräfte auf den Stapelverbund der Stackanordnung erlaubt, ist daran gedacht, dass für die Herstellung der Stackanordnung in Stapelrichtung oben eine die Stackanordnung nach oben begrenzende Topplatte und in Stapelrichtung unten eine die Stackanordnung nach unten begrenzende Bodenplatte angeordnet wird.

Als Übergang zwischen einer Bodenplatte und der in Stapelrichtung ersten Elektrolysezelle der Stackanordnung bzw. zwischen der in Stapelrichtung letzten Elektrolysezelle und einer Topplatte der Stackanordnung ist gemäß einer Ausgestaltung daran gedacht, dass zwischen der Topplatte und der in Stapelrichtung letzten, unterhalb der Topplatte angeordneten Membran-Elektroden-Anordnung eine Konnektorplatte angeordnet ist und/oder dass zwischen der Bodenplatte und der in Stapelrichtung ersten, oberhalb der Bodenplatte angeordneten Membran-Elektroden-Anordnung eine Konnektorplatte angeordnet wird, wobei vorzugsweise auf die Konnektorplatte eine Beschichtung aufgebracht wird, insbesondere derart, dass mehrere voneinander beabstandete Oberflächenbereiche der Konnektorplatte beschichtet sind, vorzugsweise in Form eines Schachbrettmusters.

Die Beschichtung der Konnektorplatte kann eine halbleitende Oxid-Keramik umfassen, insbesondere eine Keramik aufweisend Lanthan (La), Strontium (Sr), Mangan (Mn) und/oder Cobalt (Co), vorzugsweise Lanthan-Strontium-Mangan-Cobalt (LSMC), Mangan Cobalt Eisenoxid (MCF), Lanthan Strontium Manganit (LSM), Lanthan-Strontium-Cobalt-Eisenoxid (LSCF) oder Lanthan-Mangan-Cobalt (LMC). Auch die Topplatte, die Bodenplatte und/oder die Interkonnektoren können mit einer derartigen Beschichtung versehen werden. Hinsichtlich der Beschichtung der Konnektorplatte ist daran gedacht, dass die Konnektorplatte mindestens auf einer Seite zumindest bereichsweise eine Beschichtung aufweist, insbesondere derart, dass mehrere voneinander beabstandete Oberflächenbereiche der Konnektorplatte beschichtet sind, vorzugsweise in Form eines Schachbrettmusters. Die freien Bereiche zwischen den Beschichtungszonen können helfen, einen hohen Binderanteil in der Beschichtung bei der Abbindung der Schicht beispielsweise in einem Fügeprozess bei der Herstellung der Stackanordnung entweichen zu lassen. Ohne ausreichende Möglichkeit für ein Entweichen des Binderanteils, beispielsweise mittels der freien Bereiche zwischen den Beschichtungszonen, kann es zu Porenbildung oder unerwünschten Höhenunterschieden auf der Konnektorplatte nach dem Abbinden der Beschichtung kommen.

Schließlich kann vorgesehen sein, dass bei der Herstellung des Stapelverbunds, der die Stackanordnung ausbildet, die Komponenten, wie Interkonnektoren, nach dem Poka-Yoke-Prinzip angeordnet, insbesondere gestapelt werden. Insbesondere kann vorgesehen sein, dass einige Komponenten in einem Vorbereitungsschritt nach bestimmten Kriterien, wie zum Beispiel Biegung, Größe der Manifoldöffnungen, oder dergleichen, sortiert werden.

Zur Begriffsbestimmung sei Folgendes angemerkt. Im Rahmen der vorliegenden Anmeldung ist mit dem Begriff "Interkonnektor" sowohl ein Interkonnektor als auch eine Bipolarplatte gemeint. Die in dieser Anmeldung enthaltenen Ausführungen zu Interkonnektoren gelten entsprechend auch für Bipolarplatten. Als Hochtemperaturelektrolyse wird im Rahmen der vorliegenden Anmeldung eine Elektrolyse im Temperaturbereich zwischen 600 °C und 1000 °C, insbesondere 800 °C und 950 °C gemeint. Jedoch ist die Hochtemperaturanalyse nicht auf diesen Temperaturbereich beschränkt, sondern kann auch bei höheren Temperaturen beispielsweise bis 1400°C durchgeführt werden.

Die vorliegende Erfindung wird anhand der nachfolgenden Zeichnungen näher erläutert. Es zeigen:
- Fig. 1: eine stark schematisierte Darstellung einer erfindungsgemäßen Elektrolyseanordnung,
- Fig. 2: eine vereinfachte Explosionsdarstellung einer bevorzugten Variante von MEA, Interkonnektoren und Glasdichtungen einer erfindungsgemäßen Elektrolyseanordnung,
- Fig. 3: eine vereinfachte Explosionsdarstellung eines generellen Aufbaus einer Stackanordnung einer erfindungsgemäßen Elektrolyseanordnung,
- Fig. 4a, 4b, 4c: eine vereinfachte Schnittdarstellung einer der Länge nach halbierten Stackanordnung mit sich verjüngender Manifoldstruktur,
- Fig. 5: eine vereinfachte Explosionsdarstellung von gestapelten Interkonnektoren,
- Fig. 6a, 6b: eine Detailansicht von Glasdichtungen auf einem Interkonnektor,
- Fig. 7: eine Konnektorplatte, und
- Fig. 8: eine stark schematisierte Schnittdarstellung von Kanalquerschnitten auf einem Interkonnektor.

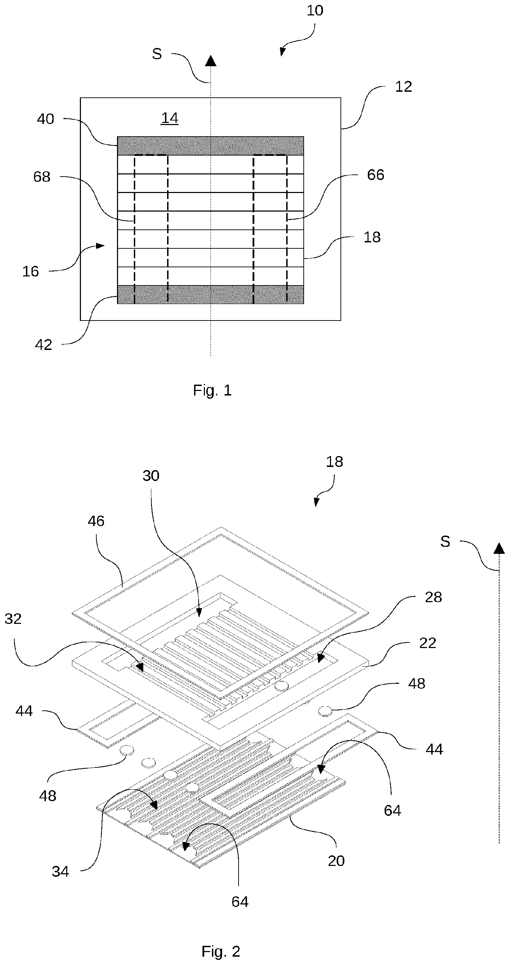

Figur 1 zeigt in stark schematisierter Darstellung eine erfindungsgemäße Elektrolyseanordnung 10 mit einem Gehäuse 12 und einer im Innenraum 14 des Gehäuses 12 angeordneten Stackanordnung 16. Die Stackanordnung 16 umfasst mehrere Elektrolysezellen 18, die im vorliegenden Beispiel in Stapelrichtung S unten von einer Bodenplatte 42 und oben von einer Topplatte 40 eingefasst sind. Gestrichelt sind eine Eduktgas-Manifoldstruktur 66 und eine Produktgas-Manifoldstruktur 68 angedeutet. Innerhalb der Eduktgas-Manifoldstruktur 66 wird ein Eduktgas, wie Wasserdampf (H₂O(g)) in die Stackanordnung 16 hineingeleitet und an die Elektrolysezellen 18 hingeführt. In der Produktgas-Manifoldstruktur 68 wird ein Produktgas, wie Wasserstoff (H₂), von den Elektrolysezellen 18 weggeführt und aus der Stackanordnung 16 herausgeleitet.

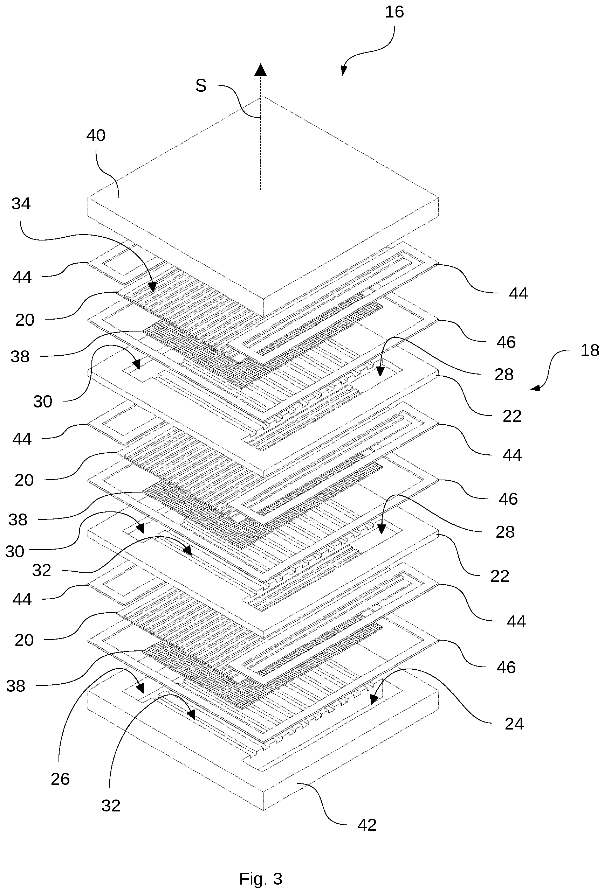

Figur 2 zeigt eine Explosionsdarstellung einer bevorzugten Variante einer Elektrolysezelle, bestehend aus einer Membran-Elektroden-Anordnung (MEA) 20, einem Interkonnektor 22 sowie einer oberhalb des Interkonnektors 22 angeordneten Glasdichtung 46 und zweier unterhalb des Interkonnektors 22 angeordneter Glasdichtungen 44. Die plattenförmig ausgebildete MEA 20 weist eine Wasserstoffseite (nicht gezeigte Unterseite) und eine Sauerstoffseite (gezeigte Oberseite) auf. Auch der ebenfalls etwa plattenförmig ausgebildete Interkonnektor 22 weist eine Wasserstoffseite (gezeigte Oberseite) und eine Sauerstoffseite (nicht gezeigte Unterseite) auf. Die Sauerstoffseite des Interkonnektors 22 liegt im zusammengesetzten Zustand der Elektrolysezelle auf der Sauerstoffseite der MEA 20 auf. Zur Ausbildung einer Stackanordnung 16 (vgl. Fig. 1 oder Fig. 3) werden mehrere Elektrolysezellen 18 in eine Stapelrichtung S übereinandergestapelt. Entsprechend schließt sich auf der Wasserstoffseite des Interkonnektors 22 eine MEA 20 an. Die sich anschließende MEA 20 eines in Stapelrichtung S unmittelbar folgend oberhalb angeordneten Elektrolysezelle 18 liegt mit ihrer Wasserstoffseite auf der Wasserstoffseite des Interkonnektors 22 der direkt unterhalb angeordneten Elektrolysezelle 18.

Der Interkonnektor 22 weist zwei Manifoldöffnungen 28, 30 auf, wobei eine erste Manifoldöffnung 28 für die Führung von Eduktgas dient und wobei die zweite Manifoldöffnung 30 für die Führung von Produktgas dient. Auf der Sauerstoffseite des Interkonnektors 22 sind zwei Glasdichtungen 44 jeweils um den Öffnungsrand der Manifoldöffnungen 28, 30 herum angeordnet. Die Glasdichtungen 44 dichten die Manifoldöffnungen 28, 30 zweier übereinandergestapelter Elektrolysezellen 18 derart ab, dass ein Eduktgasstrom bzw. der Produktgasstrom jeweils durch eine mittels der Manifoldöffnungen 28, 30 übereinandergestapelter Elektrolysezellen 18 ausgebildete Eduktgas-Manifoldstruktur 66 bzw. Produktgas-Manifoldstruktur 68 geführt wird. Die einzelnen Elektrolysezellen 18 sind darüber hinaus derart ausgestaltet, dass ein in einer Eduktgas-Manifoldstruktur 66 geführter Eduktgasstrom von dort auf die Wasserstoffseite des Interkonnektors 22 geführt werden kann. Auf der Wasserstoffseite des Interkonnektors 22 kommt der Eduktgasstrom für den Elektrolysevorgang mit der Wasserstoffseite einer auf der Wasserstoffseite des Interkonnektors 22 aufliegenden MEA 20 in Kontakt. Bei dem Elektrolysevorgang wird das Eduktgas zwischen der Wasserstoffseite des Interkonnektors 22 und der Wasserstoffseite der MEA 20 in Produktgas gewandelt. Das entstehende Produktgas wird auf der Wasserstoffseite des Interkonnektors 22 weiter bis in die für die Führung von Produktgas vorgesehene Manifoldöffnung 30 des Interkonnektors 22 geführt.

Zur Führung von Eduktgas aus der das Eduktgas führenden Manifoldöffnung 28 des Interkonnektors 22 kann - wie im gezeigten Beispiel - auf der Wasserstoffseite des Interkonnektors 22 eine Eduktgas-Leitungsstruktur 32 ausgebildet sein. Die Kanalstruktur auf dem Interkonnektor 22 kann 60 bis 100 Kanäle aufweisen, um eine feine, laminare Strömung zu realisieren.

Wie in Fig. 2 ebenfalls angedeutet, kann auf der Sauerstoffseite der MEA 20 eine als Kanalstruktur ausgebildete sauerstoffdurchlässige Struktur 34 zur Führung von dort erzeugtem Sauerstoff ausgebildet sein. Die sauerstoffdurchlässige Struktur 34 kann derart ausgebildet und eingerichtet sein, dass der Sauerstoff in seitliche Richtung, quer zur Ausrichtung der Eduktgas-Leitungsstruktur 32, abgeleitet wird. Die Elektrolysezelle 18 ist derart ausgestaltet, dass in einer gestapelten Anordnung mehrerer Elektrolysezellen 18 zur Ausbildung einer Stackanordnung 16 der Sauerstoff aus der Stackanordnung 16 in den Innenraum 14 des Gehäuses 12 entlassen wird.

Glasdichtungen 44, 46 auf der Wasserstoffseite und auf der Sauerstoffseite des Interkonnektors 22 sorgen für eine gasdichte Abdichtung von in einer Stackanordnung 16 gestapelter Elektrolysezellen 18 untereinander, insbesondere der Interkonnektoren 22 direkt benachbarter Elektrolysezellen 18 untereinander, derart dass die Eduktgas-Manifoldstruktur 66 und die Produktgas-Manifoldstruktur 68 gegenüber dem Innenraum 14 des Gehäuses 12 fluidisch voneinander getrennt sind. Die Glasdichtung 46 auf der Wasserstoffseite des Interkonnektors 22 ist derart angeordnet, dass sie den Interkonnektor 22 im Randbereich seiner Wasserstoffseite vollumfänglich umläuft. Im zusammengesetzten Zustand der Stackanordnung 16 dichtet die Glasdichtung 44 einen in Stapelrichtung S ersten Interkonnektor 22 auf seiner Wasserstoffseite gegen einen in Stapelrichtung S angrenzend angeordneten zweiten Interkonnektor 22 auf dessen Sauerstoffseite ab. Die Glasdichtungen 44, 46 wirken derart mit den Interkonnektoren 22 gestapelter Elektrolysezellen 18 zusammen, dass zum einen zwischen den Wasserstoffseiten direkt aufeinander angeordneter MEA 20 und Interkonnektor 22 eine die Eduktgas-Manifoldstruktur 66 für das Eduktgas und die Produktgas-Manifoldstruktur 68 für das Produktgas fluidisch leitende Verbindung ausgebildet ist. Des Weiteren wirken die Glasdichtungen 44, 46 derart mit den Interkonnektoren 22 gestapelter Elektrolysezellen 18 zusammen, dass der Zwischenraum zwischen den Sauerstoffseiten direkt aufeinander angeordneter MEA 20 und Interkonnektor 22 fluidisch leitend mit dem Innenraum 14 des Gehäuses 12 einer Elektrolyseanordnung 10 verbunden ist.

Auf der Sauerstoffseite der MEA 20 können - wie in Fig. 2 gezeigt - zwischen der MEA 20 und dem Interkonnektor 22 Auflageelemente 48 vorgesehen sein, die einem mechanischen Spannungsausgleich zwischen MEA 20 und Interkonnektor 22 dienen, insbesondere hervorgerufen durch Temperaturunterschiede. Vorzugsweise sind die Auflageelemente 48 aus Glas oder einer Glaskeramik und werden daher auch Glaspins genannt. Wenn sich die Elektrolysezelle 18 erwärmt, entsteht durch die unterschiedlichen thermischen Wärmeausdehnungskoeffizienten der unterschiedlichen Materialien der verschiedenen Komponenten der Elektrolysezelle 18 mechanische Spannungen. Die MEA 20 ist mit einer Dicke von weit unter einem Millimeter, zum Beispiel 80 µm, vorzugsweise 30 µm, eine fragile Struktur, die bei mechanischer Belastung reißen oder brechen kann, insbesondere punktuelle Drucklast führt zu Brüchen in der MEA 20. Die Auflageelemente 48 sorgen gemeinsam mit den Dichtungen 44, 46 dafür, eine Wölbung der MEA 20 bei Erwärmung der Elektrolysezelle 18 zu vermindern. Die Auflageelemente 48 können zumindest bereichsweise in Aussparungen 64 der MEA 20 angeordnet sein, wobei die Aussparungen 64 vorzugsweise nichtdurchdringend in die MEA 20 eingearbeitet sind. Die Aussparungen 64 sind dabei vorzugsweise in eine erste Schicht der MEA 20 eingearbeitet. Alternativ werden die Aussparungen 64 dadurch gebildet, dass mehrere Schichten auf die MEA 20 aufgebracht werden und dabei bereichsweise Schichten nicht aufgetragen werden.

Figur 3 zeigt eine vereinfachte Explosionsdarstellung in schematischer Art des generellen Aufbaus einer Stackanordnung 16. In dem in Figur 3 gezeigten Beispiel weist die Stackanordnung 16 drei MEAs 20, also drei Ebenen auf. Die erfindungsgemäße Stackanordnung 16 kann alternativ auch weniger oder mehr MEAs 20 und somit entsprechend mehr Ebenen umfassen. Die Anzahl der Ebenen richtet sich nach der gewünschten Leistungsfähigkeit der Elektrolyseanordnung 10. Deckenseitig oberhalb der in Stapelrichtung S letzten MEA 20 schließt die Stackanordnung 16 mit einer Topplatte 40 ab. Bodenseitig unterhalb der in Stapelrichtung ersten MEA 20 schließt die Stackanordnung 16 mit einer Bodenplatte 42 ab.

Oberhalb der Bodenplatte 42 sind drei Elektrolysezellen 18 angeordnet, wobei die Elektrolysezellen 18 in dem gezeigten Beispiel jeweils ein vorzugsweise als Nickelnetz ausgeführtes netzartiges Metallgeflecht 38, eine MEA 20, zwei für die Abdichtung der Manifoldöffnungen 28, 30 der Interkonnektoren 22 vorgesehene Glasdichtungen 44, ein Interkonnektor 22 und eine weitere für die Abdichtung des Randbereiches der Interkonnektoren 22 vorgesehene Glasdichtung 46 umfassen. Das netzartiges Metallgeflecht 38 ist optional. Das netzartige Metallgeflecht 38 kann eine gasführende Struktur bilden und kann weiterhin dem mechanischen Stützen der MEA 20 auf dem Interkonnektor 22 dienen. Die Bodenplatte 42 ist vorliegend auf ihrer Oberseite analog zu einer Wasserstoffseite eines Interkonnektors 22 ausgebildet und wird mit einer auf der Oberseite angeordneten Glasdichtung 46 gegenüber dem Interkonnektor 22 der in Stapelrichtung S ersten Elektrolysezelle 18 abgedichtet. Die in Stapelrichtung S dritte und abschließende Elektrolysezelle 18 weist statt eines Interkonnektors 22 eine Topplatte 40 auf, die auf ihrer Unterseite analog zu einer Sauerstoffseite eines Interkonnektors 22 ausgebildet ist. Anders als die Interkonnektoren 22 weist die Topplatte keine Manifoldöffnungen 28, 30 auf. Die Topplatte 40 schließt die Stackanordnung 16 in Stapelrichtung S oben ab und verschließt die in der Stackanordnung 16 ausgebildeten Eduktgas- und Produktgas-Manifoldstrukturen 66, 68.

Die erfindungsgemäße Stackanordnungen 16 können einige wenige, beispielsweise 30, 60 bis viele, beispielsweise 400 bis etwa 900 Ebenen aufweisen. Denkbar sind grundsätzlich auch Stackanordnungen 16 mit mehr als 900 Ebenen, allerdings ist zu beachten, dass die Anforderungen an die mechanische Stabilität der Anordnung mit der Anzahl der Ebenen steigen.

Direkt unterhalb der Topplatte 40 der Stackanordnungen 16 kann zwischen oberster MEA 20 und der Topplatte 40 ein weiterer Interkonnektor 22 (nicht gezeigt) oder eine Konnektorplatte (nicht gezeigt) eingefügt sein. Die Konnektorplatte ist vorzugsweise elektrisch leitend ausgeführt, um eine elektrische Verbindung zwischen Stack und Top- oder Bodenplatte zu realisieren, und weist weiter vorzugsweise eine Antihaftbeschichtung auf. Die Antihaftbeschichtung dient einer mechanischen Entkopplung des Stacks von der Top- oder Bodenplatte. Die Konnektorplatte kann zusätzlich eine Strukturierung aufweisen, die derart ausgebildet ist, dass bei Änderungen der Temperatur die unterschiedlichen thermischen Wärmeausdehnungen der unterschiedlichen Materialien mechanisch ausgleichbar, insbesondere quer zur Stapelrichtung, sind.

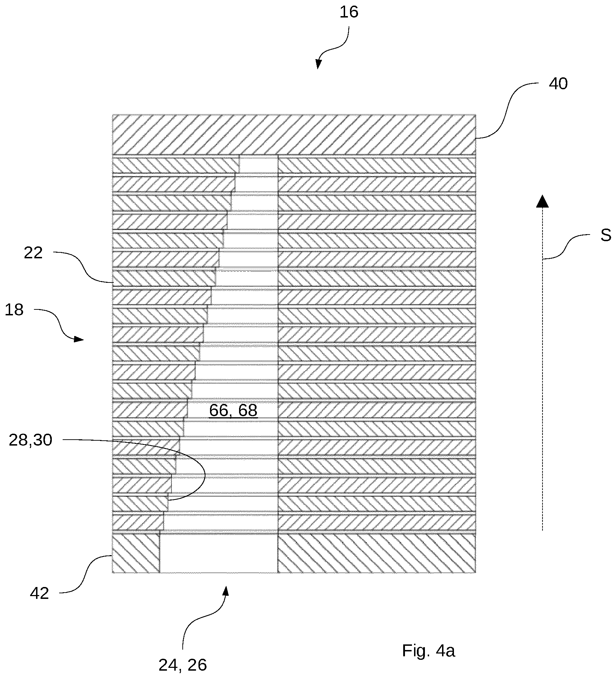

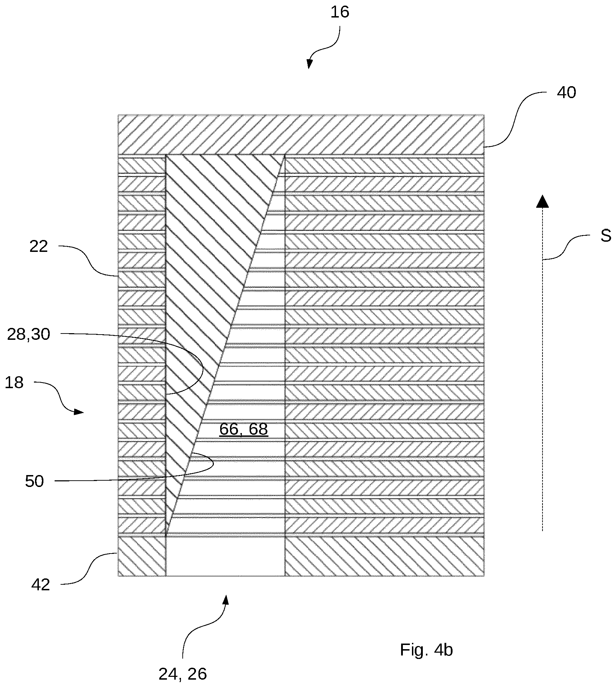

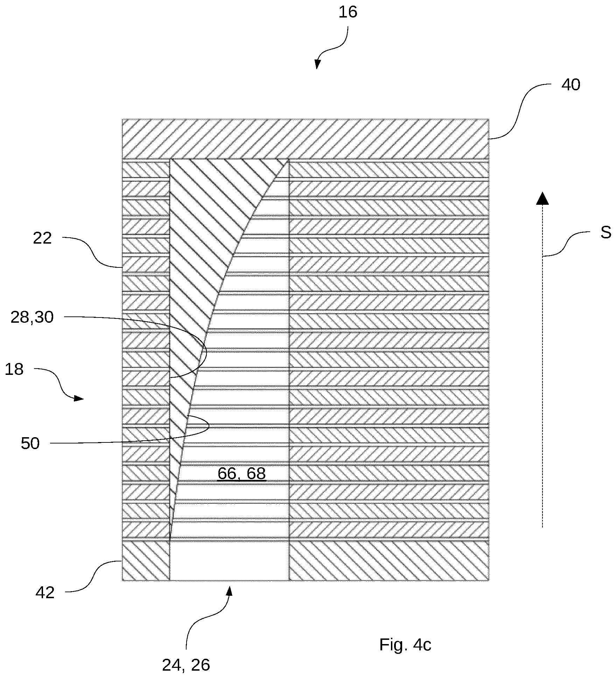

Die Figuren 4a, 4b, 4c zeigen drei schematische Teilschnitte des Querschnitts einer Stackanordnung 16 mit einem sich verjüngenden Querschnitt einer Manifoldstruktur 66, 68. Insbesondere zeigen die Figuren 4a-c jeweils eine sich verjüngende Manifoldstruktur 66, 68, bei der sich die Verjüngung ausgehend von der Bodenplatte 42 über die in Stapelrichtung S übereinandergestapelten Elektrolysezellen 18 bis zu der die Manifoldstruktur 66, 68 oben dichtend abschließenden Topplatte 40 hin erstreckt. Die Verjüngung kann in der Eduktgas-Manifoldstruktur 66 und/oder in der Produktgas-Manifoldstruktur 68 vorgesehen sein.

In dem Beispiel nach Figur 4a ist die Verjüngung der Manifoldstruktur 66, 68 mittels der in den Interkonnektoren 22 eingearbeiteten Manifoldöffnungen 28, 30 ausgeführt. Wie schematisch angedeutet, haben die Interkonnektoren 22 dafür unterschiedlich große Manifoldöffnungen 28, 30, wobei die Interkonnektoren 22 einzelner Elektrolysezellen derart ausgesucht und die Elektrolysezellen 18 derart gestapelt sind, dass sich in der Stackanordnung 16 eine sich verjüngende Struktur ergibt. Wie gezeigt, kann damit insbesondere eine etwa keilförmig verlaufende Struktur realisiert sein. Eine Keilform wird zum Beispiel erreicht, wenn die Manifoldöffnungen 28, 30 der Interkonnektoren 22 jeweils etwa rechteckig mit zwei Seitenlängen ausgebildet sind und sich die Manifoldöffnungen 28, 30 in Stapelrichtung S nach oben hin entlang einer Seitenlänge verengen. Alternativ kann die sich verjüngende Struktur auch etwa konisch geformt sein. Eine Pyramidenform oder Pyramidenstumpfform wird zum Beispiel erreicht, wenn die Manifoldöffnungen 28, 30 der Interkonnektoren 22 jeweils etwa rechteckig mit zwei Seitenlängen ausgebildet sind und sich die Manifoldöffnungen 28, 30 in Stapelrichtung S nach oben hin entlang beider Seitenlängen verengen.

Figur 4b zeigt eine sich verjüngende Manifoldstruktur 66, 68, bei der die Verjüngung mittels eines in die Manifoldstruktur 66, 68 eingelegten Einlegekörpers 50 ausgeführt ist. Die Interkonnektoren 22 der einzelnen Elektrolysezellen 18 haben jeweils gleichgroße Manifoldöffnungen 28, 30. Damit können identische Interkonnektoren 22 für die Bereitstellung der einzelnen Elektrolysezellen 18 einer Stackanordnung 16 verwendet werden, was den Herstellungsaufwand deutlich reduziert. Zur Ausbildung der Verjüngung wird der Einlegekörper 50 in die mittels der Manifoldöffnungen 28, 30 ausgebildeten Manifoldstruktur 66, 68 eingelegt. Der Einlegekörper 50 kann - wie gezeigt - einen etwa dreieckförmigen Querschnitt in Stapelrichtung S aufweisen, so dass eine sich keilförmig verjüngende Struktur realisiert ist.

Figur 4c zeigt eine besondere Form einer mittels eines Einlegekörpers 50 hergestellten Verjüngung der Manifoldstruktur 66, 68. Wie in der Ausgestaltung nach Fig. 4b haben die Interkonnektoren 22 der einzelnen Elektrolysezellen 18 jeweils gleichgroße Manifoldöffnungen 28, 30. Der Einlegekörper 50 weist im Gegensatz zur Ausgestaltung in Fig. 4b keine geradlinig verlaufende, sondern eine gewölbt verlaufende Verjüngungsfläche auf. Damit wird eine sich gewölbt verjüngende Manifoldstruktur 66, 68 realisiert, die eine besonders laminare Strömung des Eduktgases bzw. Produktgases in die Elektrolysezellen 18 hinein bzw. aus den Elektrolysezellen 18 heraus ermöglicht.

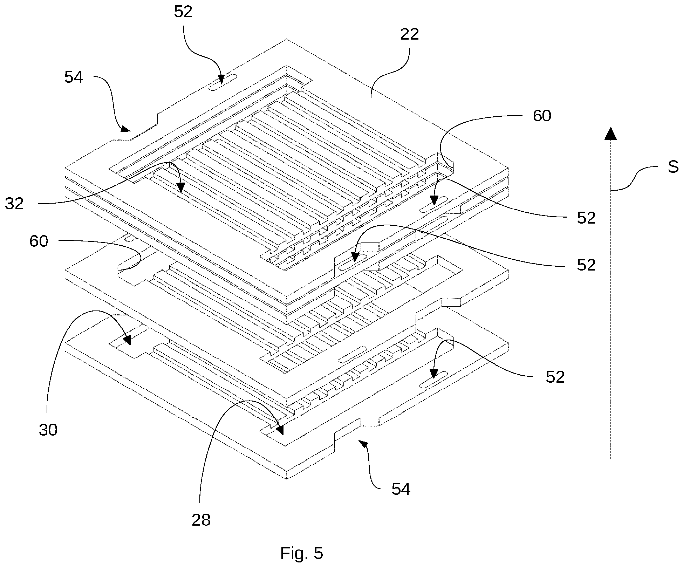

Figur 5 zeigt eine Stackanordnung 16, bei der zur Veranschaulichung von Details lediglich die Interkonnektoren 22 einzelner Elektrolysezellen 18 dargestellt sind. Die Interkonnektoren 22 weisen jeweils mindestens ein Orientierungsmerkmal 60 auf, in dem hier gezeigten Beispiel eine mit Führungskanälen ausgebildete Eduktgas-Leitungsstruktur 32, zwei Manifoldöffnungen 28, 30, sowie auf zwei gegenüberliegenden Seiten am Rand jeweils eine - im gezeigten Beispiel als Langloch - ausgebildete Kontakteinrichtung 52 zur Herstellung eines elektrisch leitenden Kontakts mit dem Interkonnektor 22. Zusätzlich zu der als Langloch ausgeführten Kontakteinrichtung 52 ist an den zwei gegenüberliegenden Seitenrändern des Interkonnektors 22 jeweils eine Aussparung 54 in den Randbereich des Interkonnektors 22 eingearbeitet. Die im gezeigten Beispiel als Langloch ausgebildete Kontakteinrichtung 52 kann zum Anschluss von Messmitteln zum Testen der Stackanordnung dienen, um beispielsweise defekte Elektrolysezellen zu identifizieren.

Die Interkonnektoren 22 sind in dieser Ausgestaltung jeweils um 180° gedreht aufeinandergestapelt, so dass die als Langlöcher ausgeführten Kontakteinrichtungen 52 und die Aussparungen 54 jeweils alternierend übereinander im Stapel angeordnet sind. Das Orientierungsmerkmal 60 dient dazu, Fehler beim Stapeln zu vermeiden und durch technische Vorkehrungen bzw. Einrichtungen eine sofortige oder frühzeitige Fehleraufdeckung und - verhinderung zu ermöglichen. Die Idee hierzu entstammt dem Poka-Yoke-Prinzip. Ist eine gestapelte Stackanordnung 16 nach dem Stapeln erst gefügt, lässt sich ein Fehler im Stapel nicht mehr beheben. Solange die Stackanordnung 16 noch nicht gefügt ist, ließe sich ein Stapelfehler noch beheben.

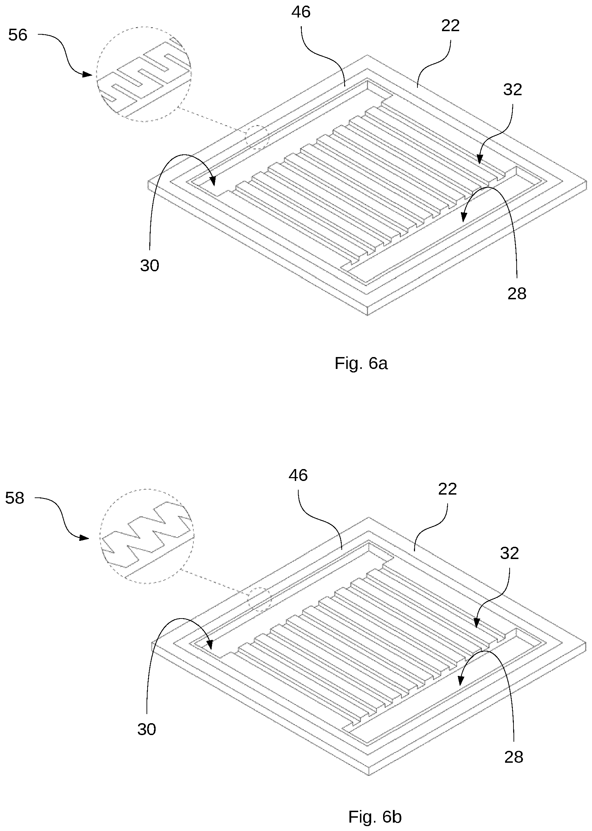

Die Figuren 6a, 6b zeigen jeweils einen Interkonnektor 22 mit einer auf der Wasserstoffseite des Interkonnektors 22 angeordneten Glasdichtung 46. Wie jeweils in einer Detailansicht der Figuren 6a und 6b gezeigt, können die Glasdichtungen 46 in einer speziellen Form auf den Interkonnektor 22 aufgebracht sein. Vorliegend ist in Fig. 6a ein mäanderförmiger Verlauf und in Fig. 6a ist ein zickzackförmiger Verlauf der auf den Interkonnektor 22 aufgebrachten Glasdichtung 46 gezeigt. Denkbar sind darüber hinaus auch andere Verlaufsformen. Diese spezielle Auftrageform erhöht die Streckenlänge der bandförmigen Glasdichtung im Gegensatz zu einer geradlinigen Führung. Damit kann bei gleicher Menge an Dichtungsmaterial im Vergleich zu einer geradlinigen Führung ein größere Oberfläche des Dichtungsmaterials bereitgestellt werden, was bei einem sich anschließenden Sinterprozess eine bessere Entgasung des Dichtungsmaterial ermöglicht. Diese bessere Entgasung kann den Sinterungsprozess beschleunigen. Alternativ ist bei weniger Menge an Dichtungsmaterial die gleiche Fläche abdichtbar. Dabei wird Dichtungsmaterial eingespart, da weniger Materialauftrag erfolgt, die Dichtleistung wird nicht beeinträchtigt und es wird überflüssiges Dichtungsmaterial vermieden, das beim Sintern aus dem Stack heraustreten kann.

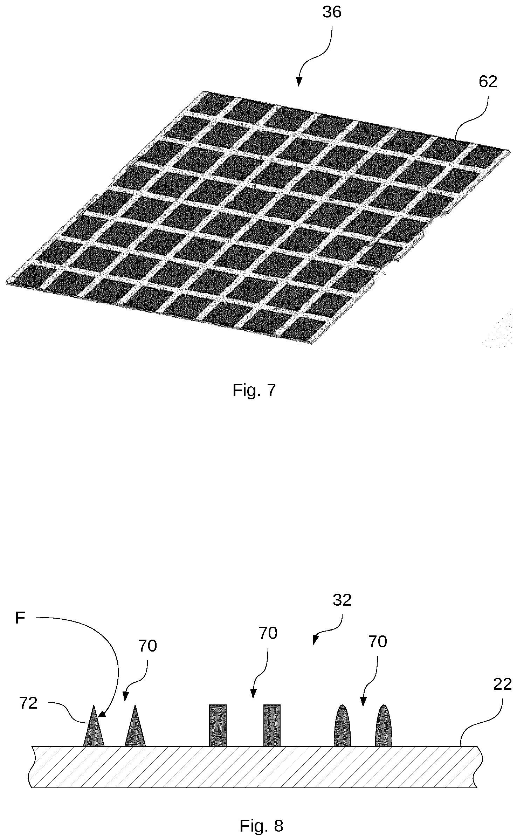

Figur 7 zeigt schematisch eine Konnektorplatte 36, die beispielsweise unterhalb einer Topplatte 40 bzw. oberhalb einer Bodenplatte 42 angeordnet werden kann. Zumindest auf einer Seite weist die Konnektorplatte 62 eine Beschichtung 62 auf. Die Beschichtung 62 kann - wie im gezeigten Beispiel - in der Art eines Schachbrettmusters auf der Oberfläche der Konnektorplatte 36 angeordnet sein. Auch auf der nicht gezeigten Seite der Konnektorplatte 36 kann eine Beschichtung vorliegen.

Figur 8 zeigt ganz schematisch Beispiele von Kanalquerschnittsformen einer als Kanalstruktur ausgebildeten Eduktgas-Leitungsstruktur 32 auf der Wasserstoffseite eines Interkonnektors 22. Die gezeigte Kanalstruktur ist in Schnittdarstellung dargestellt. Wie die Figur zeigt, können die Kanäle 70 mittels zweier benachbart zueinander angeordneten Kanalstege 72 voneinander getrennt sein. Das gezeigte Beispiel veranschaulicht denkbare Querschnittsformen der Kanalstege 72 bzw. die damit ausgeformten Querschnittsformen der Kanäle 70. Oberhalb der Kanalstege 72 ist in der Stackanordnung 16 eine MEA 20 angeordnet (nicht dargestellt). Die Kanäle 70 sind nach unten durch den Körper des Interkonnektors 22 oder einer auf dem Interkonnektor 22 vorliegenden Beschichtung begrenzt. Nach oben sind die Kanäle 70 hin zu einer darüber angeordneten MEA 20 (nicht dargestellt) offen. Für den Elektrolyseprozess kommt das in den Kanälen 70 geführte Eduktgas an den offenen Oberseiten der Kanäle 70 mit der MEA 20 in Kontakt. Um auch im Randbereich der Kanäle 70 eine ausreichende Menge an Eduktgas für den Kontakt mit der MEA 20 bereitzustellen, ist vorgesehen, dass die Flankensteilheit F der Seitenwände der Kanalstege 72 größer als oder gleich 85° ist. Die Flankensteilheit ist dabei als Median auf die mit dem plattenförmigen Interkonnektor 22 definierte Ebene bezogen.

### BEZUGSZEICHENLISTE

| | | | |
|---|---|---|---|
| 10 | Elektrolyseanordnung | 50 | Einlegekörper |
| 12 | Gehäuse | 52 | Kontakteinrichtung |
| 14 | Innenraum | 54 | Aussparung |
| 16 | Stackanordnung | 56 | mäanderförmige Struktur |
| 18 | Elektrolysezellen | 58 | zickzackförmige Struktur |
| 20 | Membran-Elektroden-Anordnung | 60 | Orientierungsmerkmal |
| 22 | Interkonnektor | 62 | Beschichtung |
| 24 | Eduktgas-Öffnung | 64 | Aussparungen |
| 26 | Produktgas-Öffnung | 66 | Eduktgas-Manifoldstruktur |
| 28 | Manifoldöffnung | 68 | Produktgas-Manifoldstruktur |
| 30 | Manifoldöffnung | 70 | Kanäle |
| 32 | Eduktgas-Leitungsstruktur | 72 | Kanalstege |
| 34 | sauerstoffdurchlässige Struktur | | |
| 36 | Konnektorplatte | S | Stapelrichtung |
| 38 | netzartiges Metallgeflecht | F | Flankensteilheit |
| 40 | Topplatte | | |
| 42 | Bodenplatte | | |
| 44 | Glasdichtung | | |
| 46 | Glasdichtung | | |
| 48 | Auflageelemente | | |

## Patentansprüche

1. Verfahren zur Herstellung einer Elektrolyseanordnung (10) umfassend
wenigstens ein Gehäuse (12) mit einem Innenraum (14),
und wenigstens einer im Innenraum (14) des Gehäuses (12) angeordneten Stackanordnung (16),
wobei die Stackanordnung (16) mehrere in eine Stapelrichtung (S) gestapelte Elektrolysezellen (18) umfasst,
wobei zumindest einige der Elektrolysezellen (18) jeweils eine Membran-Elektroden-Anordnung (MEA) (20) und einen Interkonnektor (22) umfassen, und
wobei die Membran-Elektroden-Anordnung (20) und der Interkonnektor (22) jeweils eine Sauerstoffseite und eine Wasserstoffseite aufweisen,
**dadurch gekennzeichnet, dass**
in einem Vorbereitungsschritt zur Herstellung einer Membran-Elektroden-Anordnungen (20) auf den zwei Oberflächen einer Elektrolyt-Membran j eweils mindestens eine pastöse Schicht aufgebracht wird, wobei mindestens eine der Schichten auf jeweils einer Oberfläche zur Ausbildung einer auf der Wasserstoffseite der Membran-Elektroden-Anordnungen (20) ausgebildeten ersten Elektrode und einer auf der Sauerstoffseite der Membran-Elektroden-Anordnungen (20) ausgebildeten zweiten Elektrode dient,
in einem Vorbereitungsschritt ein Dichtungsmaterial (44, 46), umfassend Glas und/oder Glaskeramik auf die Interkonnektoren (22) aufgebracht wird,
in einem Montageschritt die vorbereiteten Interkonnektoren (22) und Membran-Elektroden-Anordnungen (20) abwechselnd zu einem Stapelverbund gestapelt werden, und
in einem Montageschritt der Stapelverbund unter Einwirkung von thermischer Energie und einer auf den Stapelverbund in Stapelrichtung (S) nach innen gerichteter mechanischer Spannkraft gefügt wird.

2. Verfahren nach Anspruch 1, **dadurch gekennzeichnet, dass** wobei das Dichtungsmaterial (44, 46) mit geometrisch wiederkehrender Struktur (56, 58) auf die Interkonnektoren (22) aufgebracht wird.

3. Verfahren nach Anspruch 1 oder 2, **dadurch gekennzeichnet, dass** die geometrisch wiederkehrende Struktur (56, 58) des Dichtungsmaterials (44, 46) zickzackförmig, laschenförmig, meanderförmig oder in Form aneinander gereihter Halbkreise aufgebracht wird.

4. Verfahren nach mindestens einem der vorhergehenden Ansprüche, **dadurch gekennzeichnet, dass** das Dichtungsmaterial (44, 46) mit unterschiedlicher Dicke aufgebracht wird.

5. Verfahren nach mindestens einem der vorhergehenden Ansprüche, **dadurch gekennzeichnet, dass** die Interkonnektoren (22) auf der Sauerstoffseite und/oder auf der Wasserstoffseite frei von gasführenden Strukturen sind.

6. Verfahren nach mindestens einem der vorhergehenden Ansprüche, **dadurch gekennzeichnet, dass** zumindest einige Komponenten der Stackanordnung (16), wie Membran-Elektroden-Anordnungen (20), Interkonnektoren (22), Konnektorplatten (36), Topplatte (40) und/oder Bodenplatte (42) jeweils ein Orientierungsmerkmal (60) aufweisen mittels dem die Komponenten zur Herstellung der Stackanordnung (16) orientiert, insbesondere nach dem Poka-Yoke-Prinzip, im Stapelverbund ausgerichtet werden.

7. Verfahren nach mindestens einem der vorhergehenden Ansprüche, **dadurch gekennzeichnet, dass** mindestens eine der pastösen Schichten eine Struktur definiert, die im gefügten Zustand der Stackanordnung eine gasführende Struktur auf der Oberfläche der MEA ausbildet.

8. Verfahren nach mindestens einem der vorhergehenden Ansprüche, **dadurch gekennzeichnet, dass** zumindest in einigen Elektrolysezellen (18) zwischen der Membran-Elektroden-Anordnung (20) und dem Interkonnektor (22) Auflageelemente (48) angeordnet werden.

9. Verfahren nach Anspruch 8, **dadurch gekennzeichnet, dass** mindestens eine für die Herstellung der Membran-Elektroden-Anordnungen (20) der mit Auflageelementen (48) ausgestatteten Elektrolysezellen (18) auf die Elektrolyt-Membran aufgebrachte pastöse Schicht unter Einarbeitung von Auslassungen zur Herstellung von Aussparungen (64) zur Aufnahme der Auflageelemente (48) aufgebracht wird.

10. Verfahren nach mindestens einem der vorhergehenden Ansprüche, **dadurch gekennzeichnet, dass** in einem Vorbereitungsschritt auf mindestens einigen die Interkonnektoren (22) eine Beschichtung mittels Drucken, insbesondere mittels Siebdruck aufgebracht wird.

11. Verfahren nach Anspruch 10, **dadurch gekennzeichnet, dass** die Beschichtung der Interkonnektoren (22) eine halbleitende Oxid-Keramik umfasst, insbesondere eine Keramik aufweisend Lanthan (La), Strontium (Sr), Mangan (Mn) und/oder Cobalt (Co), vorzugsweise Lanthan-Strontium-Mangan-Cobalt (LSMC), Mangan Cobalt Eisenoxid (MCF), Lanthan Strontium Manganit (LSM), Lanthan-Strontium-Cobalt-Eisenoxid (LSCF), oder Lanthan-Mangan-Cobalt (LMC).

12. Verfahren nach mindestens einem der vorhergehenden Ansprüche, **dadurch gekennzeichnet, dass** in einem Vorbereitungsschritt Interkonnektoren (22) bereitgestellt werden, die jeweils zwei Manifoldöffnungen (28, 30) aufweisen, und wobei die Interkonnektoren (22) für die Herstellung der Stackanordnung (16) derart gestapelt werden, dass sich innerhalb der Stackanordnung (16) jeweils mittels der Manifoldöffnungen (28, 30) eine Eduktgas-Manifoldstruktur (66) und eine Produktgas-Manifoldstruktur (68) ausbilden.

13. Verfahren nach Anspruch 12, **dadurch gekennzeichnet, dass** die in die Interkonnektoren (22) eingearbeiteten Eduktgas-Manifoldöffnungen (28) und/oder die Produktgas-Manifoldöffnungen (30) zwischen einem Interkonnektor (22) zu einem nächsten Interkonnektor (22) von unterschiedlicher Größe sind, und wobei die Größen der Manifoldöffnungen (28, 30) derart gewählt sind und die Interkonnektoren (22) für die Herstellung der Stackanordnung (16) derart gestapelt werden, dass eine in Stapelrichtung (S) der Stackanordnung (16) sich verjüngende Eduktgas-Manifoldstruktur (66) und/oder eine sich verjüngende Produktgas-Manifoldstruktur (68) hergestellt wird.

14. Verfahren nach mindestens einem der vorhergehenden Ansprüche, **dadurch gekennzeichnet, dass** zumindest einige der Elektrolysezellen (18) ein netzartiges Metallgeflecht (38), vorzugsweise aufweisend Nickel, insbesondere eine Eisen-NickelLegierung, umfassen, das zwischen Membran-Elektroden-Anordnung (20) und Interkonnektor (22) angeordnet wird.

15. Verfahren nach Anspruch 14, **dadurch gekennzeichnet, dass** das Metallgeflecht (38) mittels Schweißen, insbesondere mittels Punktschweißen, an der Wasserstoffseite eines Interkonnektors (22) befestigt wird.

16. Verfahren nach mindestens einem der vorhergehenden Ansprüche, **dadurch gekennzeichnet, dass** das Fügen einen Fügeschritt umfasst, bei dem zumindest einige Interkonnektoren (22) mit einem elektrischen Strom beaufschlagt werden und mittels des durch den Interkonnektor (22) geleiteten Stroms erwärmt werden.

17. Verfahren nach mindestens einem der vorhergehenden Ansprüche, **dadurch gekennzeichnet, dass** für die Herstellung der Stackanordnung (16) in Stapelrichtung (S) oben eine die Stackanordnung (16) nach oben begrenzende Topplatte (40) und in Stapelrichtung (S) unten eine die Stackanordnung (16) nach unten begrenzende Bodenplatte (42) angeordnet wird.

18. Verfahren nach mindestens Anspruch 17, **dadurch gekennzeichnet, dass** zwischen der Topplatte (40) und der in Stapelrichtung (S) letzten, unterhalb der Topplatte (40) angeordneten Membran-Elektroden-Anordnung (20) eine Konnektorplatte (36) angeordnet ist und/oder dass zwischen der Bodenplatte (42) und der in Stapelrichtung (S) ersten, oberhalb der Bodenplatte (40) angeordneten Membran-Elektroden-Anordnung (20) eine Konnektorplatte (36) angeordnet wird, wobei vorzugsweise auf die Konnektorplatte (36) eine Beschichtung (62) aufgebracht wird, insbesondere derart, dass mehrere voneinander beabstandete Oberflächenbereiche der Konnektorplatte (36) beschichtet sind, vorzugsweise in Form eines Schachbrettmusters.
